# EUROPÄISCHE PATENTSCHRIFT

(11) **EP 0 525 344 B1**
(45) Veröffentlichungstag und Bekanntmachung des Hinweises auf die Patenterteilung: **13.03.1996**
(21) Anmeldenummer: 92109901.6
(22) Anmeldetag: 12.06.1992
(51) Int. Cl.: B44B 1/00, B44B 1/06, B28D 1/14, B23Q 35/02

(54) **Punktiergerät für Steinmetz- und Bildhauerarbeiten**
Puncturing apparatus for stone dressing and sculpture
Appareil de ponction pour tailleur de pierres et travaux de sculpture

(30) Priorität: 01.08.1991 DE 9109534 U
(43) Veröffentlichungstag der Anmeldung: 03.02.1993
(73) Patentinhaber: Dubbel, Bernd, D-48308 Senden (DE)
(72) Erfinder: Deurer, Wolfgang, Prof. Dr.-Ing., D-46485 Wesel (DE); Dondrup, Manfred, Dr., D-48499 Salzbergen (DE); Dubbel, Bernd, D-48308 Senden (DE)
(74) Vertreter: Masch, Karl Gerhard, Dr.

(56) Entgegenhaltungen:
- US-A- 4 579 487
- PATENT ABSTRACTS OF JAPAN vol. 13, no. 300 (M-848)11. Juli 1989 & JP-A-10 92 051 (TOSHIBA CORP.) 11. April 1989
- SOVIET INVENTIONS ILLUSTRATED Section PQ, Week 8331, Derwent Publications Ltd., London, GB; Class P, Page 54, AN 83-727819(31) & SU-A-961 866 (N.D. GRANICHIN) 30. September 1982
- PATENT ABSTRACTS OF JAPAN vol. 11, no. 316 (M-631)15. Oktober 1987 & JP-A-62 099 058 (DAINICHI KIKO KK) 8. Mai 1987

## Beschreibung

Die Erfindung betrifft ein Punktiergerät für Steinmetz- und Bildhauerarbeiten, mit einem Abtastorgan, welches relativ zu einer Basis einer zugeordneten Halterung in Abtaststellungen verstellbar und in diesen Abtaststellungen mit Hilfe von Halterungsfeststellern jeweils fixierbar ist.

Solche Punktiergeräte sind seit Jahrhunderten bekannt. Sie dienen dazu, die Übereinstimmung eines von einem Steinmetz bzw. Bildhauer herzustellenden Werkstückes mit einem Muster Punkt für Punkt im Zuge des Arbeitens überprüfen zu können. Die bekannten Punktiergeräte der eingangs genannten Art sind ausschließlich manuell zu bedienende Geräte, bei denen das Abtastorgan aus einem mit einer Abtastspitze versehenen Stab besteht. Solche Punktiergeräte haben sich zwar bewährt, ihr Einsatz ist aber verhältnismäßig zeitaufwendig und daher verbesserungsfähig.

Der Erfindung liegt die Aufgabe zugrunde, ein Punktiergerät der eingangs genannten Art so weiter zu entwickeln, daß die zugeordneten Arbeiten beschleunigt werden.

Hierzu lehrt die vorliegende Erfindung, daß das Abtastorgan aus einem mit einem Bohrwerkzeug ausgerüsteten Bohraggregat besteht, welches bei fixierten Halterungsfeststellern mit Hilfe eines zwischengeschalteten linearen Verstellantriebes aus der betreffenden Abtaststellung in Richtung des Bohrwerkzeuges zurückziehbar und danach bei eingeschaltetem Bohraggregat wieder in die Abtaststellung vorbewegbar ist.

Bei Einsatz des erfindungsgemäßen Punktiergerätes werden die zugeordneten Steinmetz- bzw. Bildhauerarbeiten erheblich beschleunigt. Nach Abtasten eines bestimmten Punktes am Muster mit Hilfe der Spitze des Bohrwerkzeuges wird das Punktiergerät an das betreffende Werkstück verbracht, woraufhin mit Hilfe des Bohraggregates bzw. des Bohrwerkzeuges eine Bohrung in dem Werkstück erzeugt wird, deren Boden dem am Muster abgetasteten Punktende entspricht. Der Steinmetz bzw. Bildhauer weiß mithin, wieviel Werkstoff er noch am Werkstück abtragen muß. Bei dem erfindungsgemäßen Einsatz des Bohraggregates mit dem Bohrwerkzeug ist weiterhin von Vorteil, daß durch die Richtung des Bohrwerkzeuges bzw. der von ihr erzeugten Bohrung am Werkstück auch entsprechende Flankenrichtungen gleichsam vorgegeben bzw. vorgezeichnet werden können. Jedenfalls ist der durch die Erfindung erreichte Vorteil darin zu sehen, daß entsprechende Arbeiten erheblich beschleunigt werden.

Für die weitere Ausgestaltung bestehen im Rahmen der Erfindung mehrere Möglichkeiten. So ist nach einer bevorzugten Ausführungsform vorgesehen, daß das Bohrwerkzeug kegelstumpfförmig ausgebildet ist. Entsprechend ist nämlich die vom Bohrwerkzeug erzeugte Bohrung kegelstumpfförmig und der Arbeitende kann besser erkennen, wann der Boden der entsprechenden Bohrung im Werkstück erreicht ist. Grundsätzlich kann der lineare Verstellantrieb für das Bohraggregat beliebig ausgeführt sein; bevorzugt ist jedoch eine Ausführungsform als Pneumatikzylinderkolbenanordnung, weil diese das Bohrwerkzeug gleichsam federnd am Stein hält. Die Halterung besteht im einfachsten Fall aus einem Stabgestell, dessen Stäbe relativ zueinander verstellbar und fixierbar sind. Ohne weiteres besteht aber auch die Möglichkeit, die Halterung nach Art eines Roboterarmes auszuführen. Schließlich und endlich kann die Halterung aber auch aus einer Längsführung für das Abtastorgan bzw. Bohraggregat bestehen, die mit einer um eine zur Längsführung parallele Achse drehbaren Tellerplattform für das Muster bzw. Werkstück versehen ist; diese Tellerplattform stellt dann die Basis der Halterung dar. Jedenfalls wird man die Ausführungsform zweckmäßigerweise so wählen, daß die Halterungsfeststeller gemeinsam pneumatisch, hydraulisch oder elektrisch betätigbar sind, wenn das Bohrwerkzeug am Muster in einer Abtaststellung verbracht worden ist. Zur weiteren Vereinfachung empfiehlt es sich, die Halterung mit Positionierantrieben und Abtaststellungssensoren zu versehen und die Positionierantriebe sowie Abtaststellungssensoren an einen Computer anzuschließen; auf diese Weise können am Muster eine Vielzahl von Abtaststellungen gegebenenfalls alle erforderlichen Abtaststellungen abgegriffen und im Computer eingespeichert werden und anschließend am Werkstück durch Abruf reproduziert werden. Die Basis der Halterung kann wie bei den bekannten Geräten aus einer Dreipunktlagerung bestehen. Es ist aber ohne weiteres auch möglich, die Basis aus einer mit dem Muster bzw. Werkstück in vorgegebener Stellung zu verschraubende Platte bestehen zu lassen. Bei der Ausführungsform als Dreipunktlagerung empfiehlt es sich jedenfalls diese aus mit Lagerspitzen ausgerüsteten Füßen und zugeordneten, mit Spitzenaufnahmen versehenen Aufsetzglocken auszuführen, welche letztere beim Umsetzen als Einführungshilfen dienen; dabei ist es grundsätzlich gleichgültig, ob die Füße am Muster bzw. Werkstück und die Aufsetzglocken an der Halterung oder umgekehrt angeordnet werden. Universell ist insoweit die weitere Ausgestaltung, die Lagerspitzen in den Füßen verstellbar und festsetzbar auszubilden.

Im folgenden wird die Erfindung anhand einer ein Ausführungsbeispiel darstellenden Zeichnung näher erläutert. Es zeigen in schematischer Darstellung
- Fig. 1: eine Aufsicht auf ein Steinmetzpunktiergerät und
- Fig. 2: vergrößert ein Detail in Richtung des Pfeiles A in der Fig. 1.

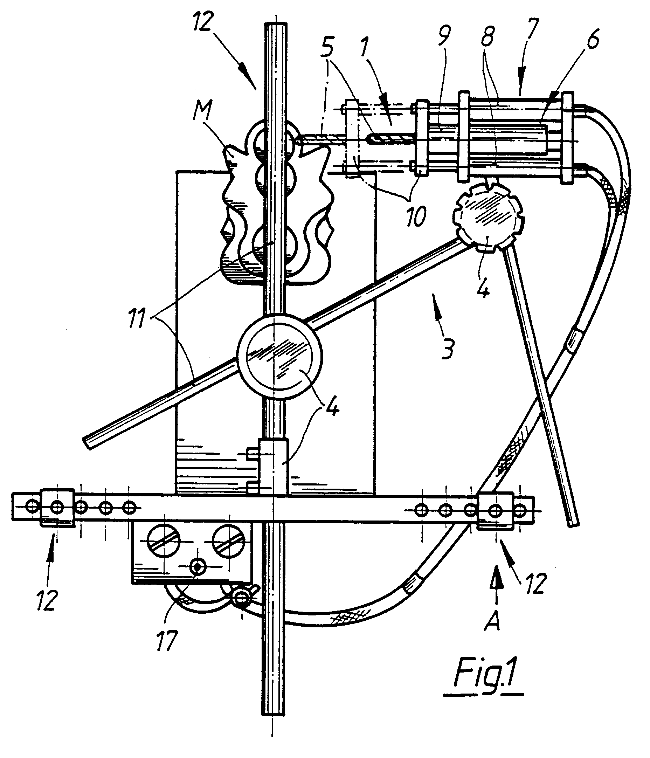

Das in den Figuren dargestellte Gerät ist ein Punktiergerät für Steinmetz- und Bildhauerarbeiten. Es ist mit einem Abtastorgan 1 ausgerüstet, welches relativ zu einer Basis 2 einer zugeordneten Halterung 3 in Abtaststellungen verstellbar und in diesen Abtaststellungen mit Hilfe von Halterungsfeststellern 4 jeweils fixierbar ist. Wie man aus der Fig. 1 ohne weiteres entnimmt, ist das Abtastorgan 1 als mit einem Bohrwerkzeug 5 ausgerüstetes Bohraggregat 6 ausgeführt. Dieses Bohraggregat 6 ist bei fixierten Halterungsfeststellern 4 mit Hilfe eines zwischengeschalteten linearen Verstellantriebes 7 aus der betreffenden Abtaststellung in Richtung des Bohrwerkzeuges 5 zurückziehbar und danach bei eingeschaltetem Bohraggregat 6 wieder in die Abtaststellung vorbewegbar. Letztere ist in Fig. 1 strichpunktiert angedeutet.

Im Ausführungsbeispiel ist das Bohrwerkzeug 5 kreiszylinderförmig ausgebildet. Kegelstumpfförmige Ausbildung ist aber ebenfalls vorteilhaft. Der lineare Verstellantrieb 7 besteht nach Fig. 1 aus einer Pneumatikzylinderkolbenanordnung, die aus zwei Pneumatikzylindern 8 aufgebaut ist, die beidseits des Bohrantriebes 9 angeordnet sind und an ihre vorderen Kolbenstangenenden durch eine Halterungsplatte 10 für das Bohraggregat 6 miteinander verbunden sind.

Wie man aus der Fig. 1 ohne weiteres erkennt, besteht die Halterung 3 aus einem Stabgestell, das aus mehreren relativ zueinander verstellbaren Stäben 11 aufgebaut ist. Die Halterungsfeststeller 4, mit deren Hilfe die relative Lage der Stäbe 11 zueinander fixierbar ist, sind im Ausführungsbeispiel manuell ausgeführt. Es besteht aber ohne weiteres die Möglichkeit, diese Halterungsfeststeller 4 gemeinsam pneumatisch zu betätigen, wenn eine Abtaststellung zu fixieren ist.

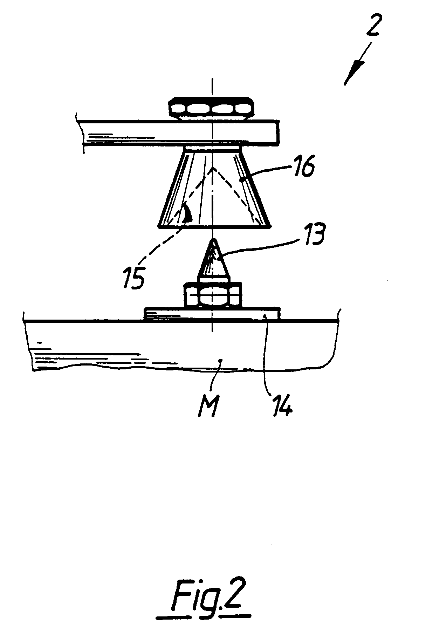

Die Basis 2 der Halterung besteht aus einer Dreipunktlagerung, von der in der Fig. 1 nur die Lage erkennbar ist (vgl. Pfeile 12). Einzelheiten der Dreipunktlagerung zeigt die Fig. 2. Sie besteht nämlich aus mit Lagerspitzen 13 ausgerüsteten Füßen 14 und zugeordneten, mit Spitzenaufnahmen 15 versehenen Aufsetzglocken 16. Die Füße 14 sind am Muster bzw. Werkstück zu befestigen, während die Aufsetzglocken 16 an den Stäben 11 des Stabgestells befestigt sind. Die Lagerspitzen 13 sind in den Füßen 14 verstellbar und in den optimalen Positionen festsetzbar, so daß eine einwandfreie Übertragung der Abtaststellungen erreichbar ist.

Die Funktionsweise der beschriebenen Vorrichtung ergibt sich unschwer aus Fig. 1. Das Punktiergerät wird an einem Muster M in Position gebracht. Nach Lösen der Halterungsfeststeller 4 wird mit Hilfe des Bohrwerkzeuges 5 eine gewünschte Stelle abgetastet. Sobald die Spitze des Bohrwerkzeuges 5 sich in der gewünschten Abtaststellung befindet, werden die Halterungsfeststeller 4 wieder fixiert. Anschließend wird das Punktiergerät an das entsprechende Werkstück gesetzt, woraufhin das Bohraggregat 6 mit Hilfe des linearen Verstellantriebes 7 in Richtung des Bohrwerkzeuges 5 aus der Abtaststellung zurückgezogen und anschließend nach Einschalten des Bohraggregates 6 über den Schalter 17 wieder in die vorgegebene Abtaststellung vorbewegt, wobei in das Werkstück eine Bohrung eingearbeitet wird, deren Boden dem am Muster abgenommenen Punkt entspricht.

## Patentansprüche

1. Punktiergerät für Steinmetz- und Bildhauerarbeiten, mit einem Abtastorgan (1), welches relativ zu einer Basis (2) einer zugeordneten Halterung (3) in Abtaststellungen verstellbar und in diesen Abtaststellungen mit Hilfe von Halterungsfeststellern (4) jeweils fixierbar ist, **dadurch gekennzeichnet**, daß das Abtastorgan (1) aus einem mit einem Bohrwerkzeug (5) ausgerüsteten Bohraggregat (6) besteht, welches bei fixierten Halterungsfeststellern (4) mit Hilfe eines zwischengeschalteten linearen Verstellantriebes (7) aus der betreffenden Abtaststellung in Richtung des Bohrwerkzeuges (5) zurückziehbar und danach bei eingeschaltetem Bohraggregat (6) wieder in die Abtaststellung vorbewegbar ist.

2. Punktiergerät nach Anspruch 1, dadurch gekennzeichnet, daß das Bohrwerkzeug (5) kegelstumpfförmig ausgebildet ist.

3. Punktiergerät nach Anspruch 1 oder 2, dadurch gekennzeichnet, daß der lineare Verstellantrieb (7) aus einer Pneumatikzylinderkolbenanordnung besteht.

4. Punktiergerät nach einem der Ansprüche 1 bis 3, dadurch gekennzeichnet, daß die Halterung (3) aus einem Stabgestell besteht.

5. Punktiergerät nach einem der Ansprüche 1 bis 4, dadurch gekennzeichnet, daß die Halterungsfeststeller (4) gemeinsam pneumatisch, hydraulisch oder elektrisch betätigbar sind.

6. Punktiergerät nach einem der Ansprüche 1 bis 5, dadurch gekennzeichnet, daß die Halterung (3) mit Positionierantrieben sowie Abtaststellungssensoren versehen ist und die Positionierantriebe sowie Abtaststellungssensoren an einen Computer angeschlossen sind.

7. Punktiergerät nach einem der Ansprüche 1 bis 6, dadurch gekennzeichnet, daß die Basis (2) der Halterung (3) aus einer Dreipunktlagerung besteht.

8. Punktiergerät nach Anspruch 7, dadurch gekennzeichnet, daß die Dreipunktlagerung aus mit Lagerspitzen (13) ausgerüsteten Füßen (14) und zugeordneten, mit Spitzenaufnahmen (15) versehenen Aufsetzglocken (16) bestehen.

9. Punktiergerät nach Anspruch 8, dadurch gekennzeichnet, daß die Lagerspitzen (13) in den Füßen (14) verstellbar und festsetzbar sind.

## Claims

1. A point-marking device for masonry and sculpture work, having a tracing element (1) which can be adjusted into tracing positions in relation to the base (2) of an associated holder (3) and can be fixed in each of these tracing positions with the aid of holder fixing devices (4), characterised in that the tracing element (1) consists of a drilling unit (6) equipped with a drilling tool (5), which drilling unit can be withdrawn from the respective tracing position in the direction of the drilling tool (5), when the holder fixing devices (4) are fixed, by means of an inserted linear adjusting drive (7) and can thereafter be advanced again into the tracing position when the drilling unit (6) is switched on.

2. A point-marking device according to claim 1, characterised in that the drilling tool (5) is constructed in the form of a truncated cone.

3. A point-marking device according to claims 1 or 2, characterised in that the linear adjusting drive (7) consists of a pneumatic cylinder-and-piston arrangement.

4. A point-marking device according to any one of claims 1 to 3, characterised in that the holder (3) consists of a rod framework.

5. A point-marking device according to any one of claims 1 to 4, characterised in that the holder fixing devices (4) are jointly operable pneumatically, hydraulically or electrically.

6. A point-marking device according to any one of claims 1 to 5, characterised in that the holder (3) is provided with positioning drives and with tracing position sensors, and the position drives and tracing position sensors are connected to a computer.

7. A point-marking device according to any one of claims 1 to 6, characterised in that the base (2) of the holder (3) consists of a three-point mounting.

8. A point-marking device according to claim 7, characterised in that the three-point mounting consists of feet (14) equipped with mounting points (13) and associated placement caps (16) provided with point seatings (15).

9. A point-marking device according to claim 8, characterised in that the mounting points (13) can be adjusted and fixed in the feet (14).

## Revendications

1. Appareil de gravure à la pointe pour des travaux exécuté par un tailleur de pierres et un sculpteur, comportant un organe de palpage (1), qui peut être déplacé par rapport à une base (2) d'un support associé (3) pour être amené dans des positions de palpage et peut être fixé respectivement dans ces positions de palpage, à l'aide d'organes de blocage (4), caractérisé en ce que l'organe de palpage (1) est constitué par un dispositif de perçage (6) équipé d'un outil de perçage (5) et qui, lorsque les dispositifs de blocage (4) sont fixés, peut être rétracté à partir de la position considérée de palpage, dans la direction de l'outil de perçage (5), à l'aide d'un dispositif d'entraînement linéaire (7) monté de façon intercalée et peut ensuite être à nouveau avancé dans la position de palpage, lorsque le dispositif de perçage (6) est activé.

2. Appareil de gravure à la pointe selon la revendication 1, caractérisé en ce que l'outil de perçage (5) est agencé avec une forme tronconique.

3. Appareil de gravure à la pointe selon la revendication 1 ou 2, caractérisé en ce que le dispositif d'entraînement linéaire (7) est constitué par un dispositif à cylindre et piston pneumatique.

4. Appareil de gravure à la pointe selon l'une des revendications 1 à 3, caractérisé en ce que le support (3) est constitué par une structure à barres.

5. Appareil de gravure à la pointe selon l'une des revendications 1 à 4, caractérisé en ce que les dispositifs de blocage (4) peuvent être actionnés en commun pneumatiquement, hydrauliquement ou électriquement.

6. Appareil de gravure à la pointe selon l'une des revendications 1 à 5, caractérisé en ce que le support (3) est équipé de dispositifs d'entraînement pour le positionnement ainsi que de capteurs de la position de palpage et que les dispositifs d'entraînement pour le positionnement ainsi que les capteurs de la position de palpage sont raccordés à un ordinateur.

7. Appareil de gravure à la pointe selon l'une des revendications 1 à 6, caractérisé en ce que la base (2) du support (3) est constituée par un support en trois points.

8. Appareil de gravure à la pointe selon la revendication 7, caractérisé en ce que le support en trois points est constitué par des pieds (14) équipés de pointes de support (13) et de cloches d'appui associées (16), équipées de logements (13) pour les pointes.

9. Appareil de gravure à la pointe selon la revendication 8, caractérisé en ce que les pointes de support (13) peuvent être déplacées et bloquées dans les pieds (14).
